# EUROPEAN PATENT SPECIFICATION

(11) **EP 0 572 203 B1**
(45) Date of publication and mention of the grant of the patent: **22.01.1997**
(21) Application number: 93304024.8
(22) Date of filing: 25.05.1993
(51) Int. Cl.: G09F 3/04, B60C 13/00

(54) **Indication label to be adhered to rubber tyre and material of a label**
Etikette zur Befestigung an einem Reifen und Material dieser Etikette
Etiquette devant être fixée à un bandage pneumatique et matériau de ladite étiquette

(30) Priority: 25.05.1992 JP 34618/92
(43) Date of publication of application: 01.12.1993
(73) Proprietor: Sumitomo Rubber Industries Ltd., Kobe-shi, Hyogo-ken (JP)
(72) Inventor: Morimura, Ryuji, Iruma-shi, Saitama-ken (JP); Nishikawa, Tadao, Higashimatsuyama-shi, Saitama-ken (JP); Nakagawa, Shunji, Takahama-shi, Aichi-ken (JP); Mizuta, Takuya, c/o Sumitomo Rubbert Ind. Limited, Akashi-shi, Hyogo-ken (JP)
(74) Representative: Stewart, Charles Geoffrey

(56) References cited:
- EP-A- 0 212 538
- EP-A- 0 237 258
- EP-A- 0 254 923
- EP-A- 0 369 023
- EP-A- 0 409 598
- GB-A- 2 006 692
- DATABASE WPIL Week 9026, Derwent Publications Ltd., London, GB; AN 90-198347 & JP-A-2 132 487 (OJI YUKA GOSEISHI K.K.) 21 May 1990

## Description

The present invention relates to a label which can be permanently adhered to a rubber tyre such as an automobile tyre or an airplane tyre and more particularly to an indication label material on which an indication such as a bar code can be printed by using a thermal transfer printer and a label on which the indication has been printed.

In a manufacturing process for a vehicle rubber tyre such as an automobile tyre, in order to manage the quality of the tyre, an indication label indicating a lot number or the like is stuck thereto prior to vulcanisation in a mould. Accordingly, it is required that the indication label to be used for such a purpose is firmly adhered to the rubber tyre and is not separated therefrom and in addition maintains a clear indication without being influenced by the heat and pressure applied in vulcanising the raw tyre in the mould.

In order to comply with such a need, various kinds of indication labels to be adhered to the rubber tyre have been proposed such as disclosed in Japanese Utility Model Publication No 54-16636, Japanese Patent Publication No 53-29595, Japanese Utility Model Publication No 62-3814 and Japanese Patent Publication No 63-42263.

However, in all of these conventional indication labels a plastics film such as a transparent polyester film is laminated onto a printed layer to intercept the influence of heat or pressured applied thereto in vulcanising the raw tyre in the mould. Therefore, it is necessary to complete the label beforehand by printing the required indication, laminating a plastics film to protect the printing and also by die-cutting. Such a label for a blow-moulded container which is applied during manufacture is known from EP-A-0369023. Other labels which are designed to be printed before being applied to the finished product are known from EP-A-0237258 and JP-A-2132487.

In recent years, management labels having a bar code printed thereon have been used in various fields of industry. It is well known as the most effective way for these management labels that an indication is applied on a pre-die-cut label in course of the manufacturing. Normally, a thermal transfer printer is used to print the indication thereon.

A disadvantage in utilising the above method while the printing is applied in the course of the manufacturing of the rubber tyre is that thermal transfer ink does not have a heat-resistant property and thus the thermal transfer ink layer melts in the vulcanising of the tyre. When the melted ink contacts the metal surface of the vulcanising mould, the ink is apt to be transferred thereto and as a result, the density of the printed image of the indication is reduced, the printed indication is destroyed, or the ink transferred to the metal surface of the vulcanising mould is retransferred to the label, thus contaminating the indication and preventing the bar code from being correctly read. In order to protect the printing layer, it is necessary to apply a plastics film over the pre-die-cut label manually, for example. However, such application is disadvantageous in the manufacturing process and also from the economic view. Accordingly, this method of printing the indication label in the manufacturing process is inappropriate.

It is an object of the present invention to provide an indication label to be adhered to a rubber tyre which solves the above problems.

According to a first aspect of the present invention an indication label to be adhered to a rubber tyre which is stuck to an unvulcanised raw rubber tyre and then fixed to it on vulcanising the rubber tyre by means of heat and pressure comprising a label base material comprising a film comprising a lower surface and an opposed upper surface, the lower surface to be disposed to the tyre, the film being made of heat-resistant plastics film such that the film does not melt on vulcanising the tyre, and a rough surface coating layer formed on the upper surface of the film, the rough surface coating layer comprising hardening resin and filler and having a surface roughness stated as the arithmetical mean deviation of the profile of the surface roughness by a stylus type surface roughness measurement in the range of from 0.5µ to 3.0µ, and the maximum height of the profile of the surface roughness in the range of from 1µ to 20µ.

Preferably the label has a rubber adhesive laminated to its lower surface. Furthermore a preferred marking is an ink layer, such as a thermal transfer ink formed and applied to the rough surface layer.

According to a second aspect of the present invention, there is provided a label material for an indication label to be adhered to a rubber tyre which is stuck to an unvulcanised raw rubber tyre and then fixed to the rubber tyre by vulcanising the rubber tyre by means of heat and pressure comprising a label base material comprising a film comprising a lower surface and an opposed upper surface, the lower surface to be disposed to the tyre, the film being made of heat-resistant plastics film such that the film does not melt on vulcanising the tyre, and a rough surface coating layer formed on the upper surface of the film, the rough surface coating layer comprising hardening resin and filler and having a surface roughness stated as the arithmetical mean deviation of the profile of the surface roughness by a stylus type surface roughness measurement in the range of from 0.5µ to 3.0µ, and the maximum height of the profile of the surface roughness in the range of from 1µ to 20µ.

With this label ink, for example a thermal transfer ink, permeates into the rough surface coating layer made of hardening resin disposed on the surface of the label material and adheres firmly thereto, and in addition, because of the rough surface, ink is prevented from adhering to the metal surface of a mould, and thus the indication can be prevented from being contaminated.

These and other objects and features of the present invention will become clear from the following description in conjunction with preferred embodiments thereof with reference to the accompanying drawings, in which:
Figure 1 is a side view showing an indication label to be adhered to a rubber tyre according to an embodiment of the present invention; and
Figure 2 is a side view showing label material of an embodiment of the present invention.

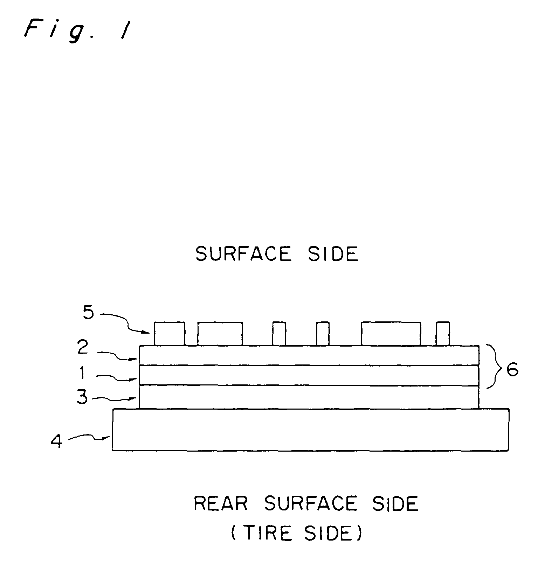

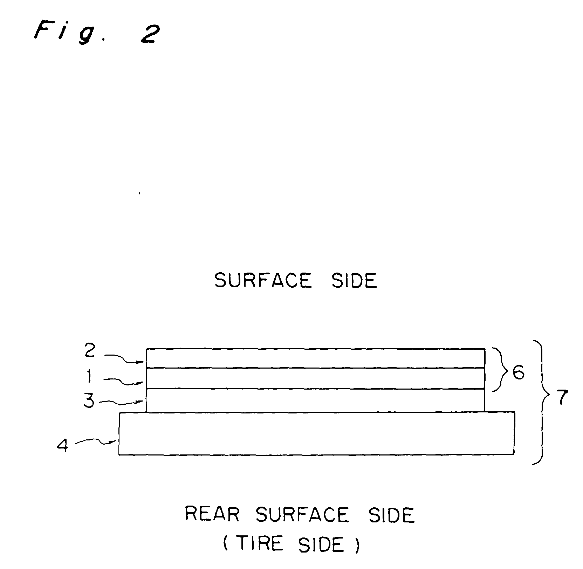

Before the description of the present invention proceeds, it is to be noted that like parts are designated by like reference numerals throughout the accompanying drawings. In Figure 1, a label base material 6 of the label comprises a film 1 of heat-resistant plastics film such as polyester film and a rough surface coating layer 2, made of hardening resin, formed on the upper surface thereof. A release paper 4 is laminated on the lower surface of the base material 6 via a pressure-sensitive rubber adhesive 3. In adhering the label to the tyre, the release paper 4 is removed from the adhesive 3 to expose the adhesive 3 for contact to the surface of the tyre. In constructing the label material 7 shown in Figure 2, the adhesive 3 is formed on the lower surface of the base material 6 and the release paper 4 is formed on the lower surface of the adhesive 3 as necessary. That is, the label is composed of the label material 7 and a thermal transfer ink layer 5, described below, formed on the upper surface of the label material 7. Reference numeral 5 denotes the thermal transfer ink layer comprising an indication such as a bar code printed by a thermal transfer printer and disposed on the upper surface of the label material 7, that is the rough surface coating layer 2 of the label material. Thus, after the thermal transfer ink layer 5 is formed on the label material of the above-described construction, the release paper 4 is released from the adhesive 3 if the release paper has been formed on the label material and then, the adhesive 3 of the label material is adhered to the surface of the unvulcanised raw tyre. The label is then fixed to the rubber tyre as a result of the vulcanisation of the tyre by means of heat and pressure.

For the film 1 of heat-resistant plastics film, polyester, polyimide or polyetherimide may be used.

The rough surface coating layer 2 comprises hardening resin and filler essentially. The surface roughness therefore has an arithmetical mean deviation of its profile measured by a stylus type surface roughness measurement in the range of 0.5µ to 3.0µ, and more favourably from 1.0µ to 2.0µ, and the maximum height of the profile is in the range of from 1µ to 20µ, and more favourably from 3µ to 15µ.

As the component of the hardening resin the following resin may be used: resin having a hardening property itself, for example melamine resin, silicon resin, acrylic resin of self-crosslinking type, for example, unsaturated polyester resin, unsaturated alkyd resin, epoxy resin, resin which does not have hardening property itself but is hardened by being crosslinked by a crosslinking component such as polyisocyanate, melamine resin, or polyamide resin added thereto, for example, acrylic resin such as polyester polyol, polyether polyol, acrylic polyol, alkyd resin, polyurethane resin, saturated polyester resin and epoxy resin. The hardening resin to be contained in the rough surface coating layer 2 is not limited to the above resins, but any resin having hardening property satisfying a predetermined heat-resistant property may be used. The hardening method is not limited to heating, but conventional methods such as radiation by radioactive energy may be used as the hardening method.

As the filler to be contained in the rough surface coating layer 2, titanium white, white carbon (silicon dioxide), clay, calcium carbonate, magnesium carbonate, or barium sulfate can be used. The filler is not limited to these substances, but substances which are added to the hardening resin and then capable of accomplishing the predetermined degree of roughness may be used.

An example of a method for forming the rough surface coating layer 2 made of hardening resin is as follows: 10 to 200 parts by weight of a filler is added to 100 parts by weight of a resin component of Paraloid AT-50, which is an acrylic resin of self-crosslinking type, and is manufactured by Rohm & Haas Co and has a self-hardening property. The mixture is applied to a film made of heat-resistant plastics film by using an appropriate method such as a gravure coater. Then, the mixture is dried in a hot-air drying oven at 150°C for 30 minutes to form a rough surface coating layer. As another example of a method for forming the rough surface coating layer, 10 parts by weight of Coronate L which is isocyanate used as hardener and manufactured by Nihon Polyurethane Kogyo Kabushiki Kaisha and 10 to 20 parts by weight of a filler are added to 100 parts by weight of a resin component of Byron 300 which is saturated polyester resin manufactured by Toyobo Co Limited, which does not have the hardening property itself but is hardened by being crosslinked by a hardener added thereto. The mixture is applied to a film made of heat-resistant plastics by using an appropriate method such as a gravure coater. Then, the mixture is dried in a hot-air drying oven at 120°C for 20 minutes to form a rough surface coating layer.

Favourably, the thickness of the dried rough surface coating layer formed as described above ranges from 1µ to 20µ and more favourably, ranges from 5µ to 15µ.

According to the above-described embodiment, since the rough surface coating layer 2 is formed on the upper surface of the film 1 made of heat-resistant plastics film, the surface roughness of the rough surface coating layer 2 is preferably adjusted to accept thermal transfer printing, and ink of the thermal transfer ink layer 5 permeates into the rough surface bottom of the rough surface coating layer 2 and adheres firmly thereto. In addition, since the top surface of the label comprises a series of rough-peaks thermal transfer ink is prevented from directly contacting to the metal surface of the vulcanising mould and adhering thereto without being influenced by heat and pressure used in the process of vulcanising the rubber tyre.

For the surface roughness of the rough surface coating layer 2, the arithmetical mean deviation of the profile measured by a stylus type surface roughness measurement is in the range of from 0.5µ to 3.0µ, and more favourably from 1.0µ to 2.0µ, and the maximum height of the profile is in the range of from 1µ to 20µ, and more favourably from 3µ to 15µ. If the average roughness of the rough surface coating layer 2 is rougher than the above range, an indication printed by a thermal transfer printer is unclear. If the average roughness of the rough surface coating layer 2 is finer than the above range, an indication printed by a thermal transfer printing is transferable to the metal surface of a vulcanising mould and thus the final density of the printed indication is low and in addition the label contacts the same position of the vulcanising mould and thus ink which has adhered to the metal surface of the vulcanising mould from a previous tyre is transferred thereto, thus contaminating the indication on the label and preventing the bar code from being correctly read.

The present invention is not limited to the above-described embodiment and can be varied in various aspects. For example, the release paper 4 may not be provided on the label or the label material.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. An indication label to be adhered to a rubber tyre which is stuck to an unvulcanised raw rubber tyre and then fixed to it on vulcanising the rubber tyre by means of heat and pressure comprising a label base material (6) comprising a film (1) comprising a lower surface and an opposed upper surface, the lower surface to be disposed to the tyre, the film (1) being made of heat-resistant plastics film such that the film does not melt on vulcanising the tyre, and a rough surface coating layer (2) formed on the upper surface of the film (1), the rough surface coating layer (2) comprising hardening resin and filler and having a surface roughness stated as the arithmetical mean deviation of the profile of the surface roughness by a stylus type surface roughness measurement in the range of from 0.5µ to 3.0µ, and the maximum height of the profile of the surface roughness in the range of from 1µ to 20µ.

2. An indication label according to claim 1 characterised by a rubber adhesive (3) laminated on a lower surface of the film (1) of the label base material (6).

3. An indication label according to claim 1 or 2 characterised in that the marking comprises an ink layer (5) formed on a surface of the label base material (6) which comprises the rough surface coating layer (2).

4. An indication label as claimed in claim 1, 2 or 3 characterised in that the ink layer is made of thermal transfer ink.

5. A label material for an indication label to be adhered to a rubber tyre which is stuck to an unvulcanised raw rubber tyre and then fixed to the rubber tyre by vulcanising the rubber tyre by means of heat and pressure comprising a label base material (6) comprising a film (1) comprising a lower surface and an opposed upper surface, the lower surface to be disposed to the tyre, the film (1) being made of heat-resistant plastics film such that the film does not melt on vulcanising the tyre, and a rough surface coating layer (2) formed on the upper surface of the film (1), the rough surface coating layer (2) comprising hardening resin and filler and having a surface roughness stated as the arithmetical mean deviation of the profile of the surface roughness by a stylus type surface roughness measurement in the range of from 0.5µ to 3.0µ, and the maximum height of the profile of the surface roughness in the range of from 1µ to 20µ.

6. A label material according to claim 5 characterised by a rubber adhesive (3) laminated on a lower surface of the film (1) of the label base material (6).

7. A label material as claimed in claim 5 or 6 characterised in that the ink layer is made of a thermal transfer ink.

8. A label material as claimed in claim 6 or 7 characterised in that a release paper (4) is formed on a lower surface of the rubber adhesive (3).

## Patentansprüche

1. Kennzeichnungsetikett zur Befestigung an einem Gummireifen, das an einen nicht vulkanisierten Rohgummireifen angeklebt und dann an ihm beim Vulkanisieren des Gummireifens durch Wärme und Druck befestigt wird, mit einem Etikett-Grundmaterial (6), das einen Film (1) umfaßt, der eine untere Oberfläche und eine gegenüberliegende obere Oberfläche aufweist, wobei die untere Oberfläche an dem Reifen angeordnet werden soll, der Film (1) aus einem wärmebeständigen Kunststofffilm hergestellt ist, so daß der Film beim Vulkanisieren des Reifens nicht schmilzt, und eine Deckschicht (2) mit einer rauhen Oberfläche, die auf der oberen Oberfläche des Films (1) gebildet ist, wobei die Deckschicht (2) mit einer rauhen Oberfläche ein Härteharz und einen Füllstoff umfaßt und eine Oberflächenrauhigkeit besitzt, die als die Abweichung vom arithmetischen Mittel des Profils der Oberflächenrauhigkeit durch eine Messung der Oberflächenrauhigkeit mit einem Fühler in dem Bereich von 0,5µ bis 3,0µ angegeben wird, und die maximale Höhe des Profils der Oberflächenrauhigkeit in dem Bereich 1µ bis 20µ.

2. Kennzeichnungsetikett nach Anspruch 1, gekennzeichnet durch ein Gummihaftmittel (3), das auf einer unteren Oberfläche des Films (1) des Etikett-Grundmaterials (6) schichtartig aufgebracht ist.

3. Kennzeichnungsetikett nach Anspruch 1 oder 2, dadurch gekennzeichnet, daß die Markierung eine Tintenschicht (5) umfaßt, die auf einer Oberfläche des Etikett-Grundmaterials (6) gebildet ist, das die Deckschicht (2) mit einer rauhen Oberfläche aufweist.

4. Kennzeichnungsetikett mit Anspruch 1, 2 oder 3, dadurch gekennzeichnet, daß die Tintenschicht aus einer Thermo-Übertragungstinte hergestellt ist.

5. Etikettenmaterial für ein an einem Gummireifen zu befestigendes Kennzeichnungsetikett, welches an einen nicht vulkanisierten Rohgummireifen angeklebt und dann an dem Gummireifen durch Vulkanisieren des Gummireifens mittels Wärme und Druck befestigt wird, mit einem Etikett-Grundmaterial (6), das einen Film (1) umfaßt, der eine untere Oberfläche und eine gegenüberliegende obere Oberfläche aufweist, wobei die untere Oberfläche an dem Reifen angeordnet werden soll, der Film (1) aus einem wärmebeständigen Kunststoffilm hergestellt ist, so daß der Film beim Vulkanisieren des Reifens nicht schmilzt, und eine Deckschicht (2) mit einer rauhen Oberfläche, die auf der oberen Oberfläche des Films (1) gebildet ist, wobei die Deckschicht (2) mit einer rauhen Oberfläche ein Härteharz und einen Füllstoff umfaßt und eine Oberflächenrauhigkeit besitzt, die als die Abweichung vom arithmetischen Mittel des Profils der Oberflächenrauhigkeit durch eine Messung der Oberflächenrauhigkeit mit einem Fühler in dem Bereich von 0,5µ bis 3,0µ angegeben wird, und die maximale Höhe des Profils der Oberflächenrauhigkeit in dem Bereich von 1µ bis 20µ.

6. Etikettenmaterial nach Anspruch 5, gekennzeichnet durch ein Gummihaftmittel (3), das auf einer unteren Oberfläche des Films (1) des Etikett-Grundmaterials (6) schichtartig aufgebracht ist.

7. Etikettenmaterial nach Anspruch 5 oder 6, dadurch gekennzeichnet, daß die Tintenschicht aus einer Thermo-Übertragungstinte hergestellt ist.

8. Etikettenmaterial nach Anspruch 6 oder 7, dadurch gekennzeichnet, daß ein Schutzpapier (4) auf einer unteren Oberfläche des Gummihaftmittels (3) gebildet ist.

## Revendications

1. Etiquette indicatrice destinée à être collée à un pneumatique de caoutchouc, adhérant à un pneumatique non vulcanisé de caoutchouc et fixée au pneumatique lors de la vulcanisation du pneumatique de caoutchouc par la chaleur et la pression, comprenant un matériau (6) de base d'étiquette comportant un film (1) ayant une surface inférieure et une surface supérieure opposées, la surface inférieure étant destinée à être tournée vers le pneumatique, le film (1) étant formé d'une matière plastique résistant à la chaleur si bien que le film ne fond pas lors de la vulcanisation du pneumatique, et une couche (2) de revêtement à surface rugueuse formée à la surface supérieure du film (1), la couche (2) de revêtement à surface rugueuse contenant une résine qui durcit et une charge et ayant une rugosité de surface déterminée sous forme de l'écart arithmétique moyen du profil de la rugosité de surface dans une mesure de rugosité de surface du type à style comprise entre 0,5 et 3,0 µm, la hauteur maximale du profil de la rugosité de surface étant comprise entre 1 et 20 µm.

2. Etiquette indicatrice selon la revendication 1, caractérisée par un adhésif (3) de caoutchouc collé à la surface inférieure du film (1) du matériau (6) de base d'étiquette.

3. Etiquette indicatrice selon la revendication 1 ou 2, caractérisée en ce que le marquage est une couche d'encre (5) formée sur une surface du matériau (6) de base d'étiquette qui a la couche (2) de revêtement à surface rugueuse.

4. Etiquette indicatrice selon la revendication 1, 2 ou 3, caractérisée en ce que la couche d'encre est formée d'une encre de report thermique.

5. Matériau d'étiquette destiné à une étiquette indicatrice destinée à être collée sur un pneumatique de caoutchouc, adhérant à un pneumatique non vulcanisé de caoutchouc, puis fixée au pneumatique de caoutchouc par vulcanisation du pneumatique par application de chaleur et de pression, comprenant un matériau (6) de base d'étiquette ayant un film (1) qui a une surface inférieure et une surface supérieure opposées, la surface inférieure étant destinée à être disposée sur le pneumatique, le film (1) étant formé d'un film de matière plastique résistant à la chaleur afin que le film ne fonde pas lors de la vulcanisation du pneumatique, et une couche (2) de revêtement à surface rugueuse formée à la surface supérieure du film (1), la couche (2) de revêtement à surface rugueuse comprenant une résine qui durcit et une charge et ayant une rugosité de surface déterminée par l'écart arithmétique moyen du profil de la rugosité de surface, dans une mesure de rugosité de surface du type à style, comprise entre 0,5 et 3,0 µm, et la hauteur maximale du profil de la rugosité de surface est comprise entre 1 et 20 µm.

6. Matériau d'étiquette selon la revendication 5, caractérisé par un adhésif (3) de caoutchouc collé à une surface inférieure du film (1) du matériau (6) de base d'étiquette.

7. Matériau d'étiquette selon la revendication 5 ou 6, caractérisé en ce que la couche d'encre est formée d'une encre de report thermique.

8. Matériau d'étiquette selon la revendication 6 ou 7, caractérisé en ce qu'un papier protecteur (4) est placé à une surface inférieure de l'adhésif (3) de caoutchouc.
